# EUROPÄISCHE PATENTSCHRIFT

(11) **EP 2 075 655 B1**
(45) Veröffentlichungstag und Bekanntmachung des Hinweises auf die Patenterteilung: **08.06.2011**
(21) Anmeldenummer: 08021860.5
(22) Anmeldetag: 17.12.2008
(51) Int. Cl.: G05B 19/042, G05B 19/05

(54) **Sicherheitssteuerung**
Safety control
Commande de sécurité

(30) Priorität: 27.12.2007 DE 102007063291
(43) Veröffentlichungstag der Anmeldung: 01.07.2009
(73) Patentinhaber: Robert Bosch GmbH, 70469 Stuttgart (DE)
(72) Erfinder: Nikolai, Horst-Dieter, 64720 Michelstadt (DE); Rug, Volker, 64720 Michelstadt (DE)
(74) Vertreter: Thürer, Andreas

(56) Entgegenhaltungen:
- EP-A- 0 109 602
- EP-A- 1 128 241
- EP-A- 1 672 446

## Beschreibung

Die vorliegende Erfindung entspringt dem Gebiet der Automatisierungstechnik, insbesondere dem Gebiet der programmierbaren Steuerungen, insbesondere dem Gebiet der Sicherheitssteuerungen, und beschreibt eine Vorrichtung zur Erhöhung der Sicherheit bei Anwendungsprozessen sowie ein Verfahren zum Betrieb einer solchen Steuerung.

Bei Werkzeug, Druck-, und Verpackungsmaschinen oder Montage-, Handling- und Roboterapplikationen hat der Schutz von Personen vor unkontrollierten Maschinenbewegungen Vorrang. Alle Maschinenhersteller müssen im Rahmen der Konstruktion ihrer Maschinen eine Gefährdungsanalyse und Risikobeurteilung durchführen. Zur Erfüllung dieser sehr hohen Anforderungen werden für die Steuerung der Maschinen sogenannte Sicherheitssteuerungen erforderlich.

Die DE 102004018857 A1 zeigt eine Sicherheitssteuerung aus dem Stand der Technik. Aufgabe der hier beschriebenen Lösung ist es, ein Verfahren und eine Vorrichtung zum Steuern von Sicherheitsfunktionen im Rahmen einer nicht auf Sicherheitsfunktionen ausgerichteten Systemsteuerung bereitzustellen, wobei sich das die Sicherheitsfunktionen zusammenfassende Sicherheitsprogramm durch eine geringe Komplexität auszeichnet und in beliebiger unsicherer Programmumgebung ablaufen kann, ohne dass Fehler bei der Steuerung nicht-sicherheitsrelevanter Steuerungsfunktionen zu einem Fehler beim Steuern von Sicherheitsfunktionen führen.

Anwendungsprozesse in Verbindung mit Sicherheitssteuerungen werden in der Regel mittels einer Steuerung selbst und einer Vielzahl von Feldgeräten realisiert. Die Aufgabe der Feldgeräte ist es, die Prozesszustände zu erfassen oder zu überwachen und diese prozessrelevanten Informationen an die Steuerung weiterzugeben oder prozessrelevante Informationen von der Steuerung zu übernehmen. Feldgeräte können zum Beispiel Sensoren, Taster, Bewegungsmelder, aber auch elektrische Antriebe sein. Die Verbindung zwischen Feldgerät und Steuerung erfolgt beispielsweise mittels sogenannter Eingabe-/Ausgabemittel (E/A-Baugruppen). Die E/A-Baugruppen können mit der Steuerung beispielsweise mittels eines Feldbusses kommunizieren. Die E/A-Baugruppen können hierarchisch gegliedert sein und werden in der Regel mittels eines sogenannten Feldbuskopfes am Feldbus angebunden. Zu einer sicheren Steuerung gehören auch sichere E/A-Baugruppen.

Aktuell ist von der Anmelderin unter der Bezeichnung SERCOS Interface® (SErial Real Time COmmunication System) ein verteiltes Kommunikationssystem mit ringförmiger Struktur auf dem Markt erhältlich, welches als Feldbus geeignet für Sicherheitsanwendungen, aber nicht zwingend vorgeschrieben ist. Die Teilnehmer sind hier üblicherweise mittels Lichtwellenleiter mit einem Zentralteilnehmer (z.B. der Steuerung) verbunden. Das SERCOS interface® spezifiziert eine streng hierarchische Kommunikation. Daten werden in Form von Datenblöcken, den sogenannten Telegrammen oder "Frames" in zeitlich konstanten Zyklen zwischen der Steuerung (Master) und den Unterstationen (Slave) ausgetauscht. Eine unmittelbare Kommunikation zwischen den weiteren Teilnehmern bzw. der Unterstationen findet nicht statt. Zusätzlich werden Dateninhalte festgelegt, d.h. die Bedeutung, Darstellung und Funktionalität der übertragenen Daten ist in großem Maße vordefiniert. Bei dem SERCOS interface® entspricht dem Master die Anschaltung der Steuerung an den Ring und dem Slave die Anschaltung einer oder mehrerer Unterstationen (Antriebe oder E/A- . Baugruppen). Mehrere Ringe an einer Steuerung sind möglich, wobei die Koordination der einzelnen Ringe zueinander Aufgabe der Steuerung ist und nicht vom SERCOS interface® spezifiziert wird. Alternative Feldbusstandards wären Profibus oder CAN-Bus.

Die Grundvoraussetzung für Komponenten einer Sicherheitsanwendung ist, dass diese im Falle einer Betriebsstörung einen sicheren Zustand annehmen. Unter einem sicheren Zustand wird derjenige Zustand verstanden, der eine potentielle Gefährdung sicher verhindert. Für den Bereich der Automatisierungstechnik ist in der Regel der energiefreie Zustand ein sicherer Zustand. Zur Kommunikation verwendet man bei diesen Anwendungen sogenannte sichere Feldbusse, die zum Beispiel auf dem oben beschriebenen SERCOS interface® basieren können. Sicherheitsrelevante Komponenten müssen außerdem die einschlägigen Normen, wie die IEC 61508 erfüllen und werden von Zertifizierungsstellen, wie z.B. dem TÜV, zertifiziert. Außerdem gibt es verschiedene Sicherheitslevel SIL 1-4, denen diese Baugruppen zugeordnet werden können.

Die aus dem Stand der Technik bekannten Steuerungen arbeiten in der Regel mit zumindest einem Datenverarbeitungsmittel zur Realisierung zumindest zweier Datenkanäle sowie vorzugsweise mit einer Datenweiche, mittels derer beide Datenkanäle zusammengeführt und in einem Speichermittel abgelegt werden können. Die Daten können auch ohne Verwendung einer Weiche in einem Speicher abgelegt und anschließend auf Korrektheit überprüft werden. Eine übergeordnete Datenverarbeitungseinheit kann dann auf den Speicher zugreifen und die Daten auslesen. Bei der übergeordneten Datenverarbeitungseinheit handelt es sich in der Regel um ein Hostsystem, bspw. ein Feldbussystem (Profibus, SERCOS, etc.).

Aus dem Stand der Technik bekannte Ansätze zur Realisierung von Sicherheitssteuerungen können fehleranfällig sein und damit ein Sicherheitsrisiko darstellen, wenn ein Zugriff auf das Speichermittel jederzeit und unkontrolliert möglich ist. Das heißt unabhängig davon, ob die Daten vollständig oder korrekt im Speichermittel vorliegen, könnte ein Datenzugriff auf theoretisch unvollständige und damit unsichere Daten erfolgen.EP-A-1 672 446 und EP-A-1 128 241 beschreiben jeweils eine Steuerung gemäß dem Oberbegriff des Anspruchs 1.

Die Aufgabe der Erfindung besteht darin, die Sicherheit von Sicherheitssteuerungen weiter zu erhöhen.

Die Erfindung löst diese Aufgabe mit der Steuerung nach Anspruch 1 und dem Verfahren nach Anspruch 12. Hierbei wird die Aufgabe gelöst unter Verwendung einer Steuerung mit zumindest einem Datenverarbeitungsmittel zur Realisierung eines ersten Datenkanals und eines zweiten Datenkanals sowie mit einem Datenweitergabemittel bzw. einem Übergabespeicher, welches mit beiden Datenkanälen derart verbunden ist, dass mittels des Datenweitergabemittels Daten aus zumindest einem Datenkanal an eine an die Steuerung angeschlossene übergeordnete Einrichtung bzw. Hostsystem bzw. Host übertragbar sind, wobei erfindungsgemäß eine aktive Datensperre bzw. Hostsperre vorgesehen ist, mittels derer die mittels des Datenweitergabemittels realisierbare Datenweitergabe an die übergeordnete Einrichtung beeinflussbar ist.

Bei dem Datenverarbeitungsmittel handelt es sich um eine Recheneinheit (Mikrocontroller, CPU), welche gleichzeitig mehrere (Echtzeit-) Datenkanäle realisieren kann. Selbstverständlich könnten auch mehrere Recheneinheiten parallel verwendet werden, die auf demselben Silizium realisiert sind oder separat aufgebaut werden. Die konkrete Realisierung hängt von der Applikation und dem zukünftigen Datenvolumen ab. Die erfindungsgemäße Lösung hat den Vorteil, dass eine Datenweitergabe an die übergeordnete Einrichtung zu einem definierbaren Zeitpunkt erfolgen kann und die übergeordnete Einrichtung erst dann ein Zugriffsrecht erhält, wenn die zu lesenden Daten gültig sind. Die erfindungsgemäße Lösung ist in Verbindung mit allen verfügbaren Protokollen (SERCOS, Profibus, etc.) einsetzbar, auch wenn dem zu übertragenden sicheren Protokoll beispielsweise eine ungerade Byteanzahl zugrunde liegt. Mit der erfindungsgemäßen Idee werden kollidierende Zugriffe auf das Datenweitergabemittel durch Datenzugriffe mittels mehrerer Instanzen (Recheneinheiten, übergeordnete Einrichtungen, Kanäle) vermieden und die Datenübergabe kontrollierbar, was insbesondere die Erfüllung der Vorschriften von Zertifizierungsstellen für sicherheitsrelevante Anwendungen erleichtert. Die Erfindung kann beispielsweise als mehrkanalige und selbständige SPS realisiert werden oder als Sicherheitsmodul, welches die Funktion einer Sicherheitssteuerung in Verbindung mit anderen Komponenten der Antriebstechnik (Antriebsregler, Antriebssteuerung, SPS, NC, etc.) als autark arbeitende Einheit unabhängig von der Funktion der anderen Komponenten erfüllt. Die Erfindung kann auch als optionales Modul für antriebsspezifische Peripherie realisiert sein, dessen Funktion verknüpfbar mit der Funktion der Peripherie ist. Bei der übergeordneten Einheit, beziehungsweise dem übergeordneten System, könnte es sich beispielsweise um ein Feldbussystem (Hostsystem) handeln, welches Prozessdaten seriell oder wahlweise je nach Applikation auch parallel zwischen der erfindungsgemäßen Steuerung und mittels des Feldbussystem an die Steuerung angeschlossenen Aktuatoren und/oder Sensoren austauscht. Mittels der Erfindung ist es möglich den Datenaustausch mit Aktoren und/oder Sensoren bei vorliegenden falschen oder unvollständigen Telegrammen, welche zur Kapselung der Prozessdaten dienen, zu unterbinden und eine aktiv steuerbare Verriegelung der Datenweitergabe zu realisieren. Gleichzeitig werden damit Zeitfenster mit undefinierten Datenzuständen wirksam ausgeblendet, was die Weiterverarbeitung ungültiger Daten durch die Steuerungs-Peripherie verhindert und Sicherheitsrisiken vorbeugt.

Das Verfahren zum Betrieb einer zuvor genannten Steuerung umfasst folgende Verfahrensschritte:
(Redundante) Datenverarbeitung mittels des Datenverarbeitungsmittels beziehungsweise mittels autarker parallel zueinander existierender Datenkanäle, welche mittels eines oder mehrerer Datenverarbeitungsmittel realisiert sein können; (Redundante) Datenübertragung mittels der Datenkanäle an das Datenweitergabemittel unter Verwendung paralleler voneinander unabhängiger Adressbusse und Datenbusse; Beeinflussung des Datenflusses zwischen den Kanälen und/oder einer anschließbaren übergeordneten Einheit unter Berücksichtigung eines Datenfreigabesignals, welches die Datensperre aktivieren oder deaktivieren kann. Mittels der Datensperre können Daten bidirektional übertragen werden, indem die Datensperre mittels eines Steuersignals angesteuert wird. Auf das Datenweitergabemittel werden gleichzeitig mehrere Lesezugriffe mittels der Kanäle durchgeführt, so dass mittels der Kanäle Daten redundant an das Datenweitergabemittel übertragen werden können.

Vorteilhafte Ausgestaltungsformen der Erfindung ergeben sich aus den abhängigen Ansprüchen.

Vorteilhafterweise nutzt zumindest einer der Kanäle eine physikalische Datenschnittstelle für den Datenaustausch mit dem Datenweitergabemittel, welche dieselbe physikalische Datenschnittstelle ist, die das Datenweitergabemittel zum Datenaustausch mit der Datensperre nutzt. Dies spart zusätzliche Datenleitungen beziehungsweise Datenbusse ein.

Bevorzugt wird die Steuerung der Datenweitergabe mittels eines Datenfreigabesignals realisiert, welches auch mittels des Datenverarbeitungsmittels realisierbar ist. Die Datenweitergabe kann somit mittels des Datenverarbeitungsmittels beziehungsweise unter Berücksichtigung eines mittels des Datenverarbeitungsmittels erzeugten Überprüfungsergebnisses überwacht werden.

Die Steuerung der Datenweitergabe mittels des Datenfreigabesignals kann auch noch zusätzlich unter Berücksichtigung eines zeitlich steuerbaren Überwachungsmittels realisiert sein. Abhängig vom Überwachungsergebnis wird somit eine Datenfreigabe oder eine Datensperre realisiert. Es werden bevorzugt mehrere Entscheidungskriterien logisch miteinander verknüpft, um eine Datenfreigabe oder eine Datensperre zu realisieren. Beispielsweise könnten mehrere mittels des Datenverarbeitungsmittels realisierte Kanäle separate Überprüfungsmaßnahmen bezüglich der Zuverlässigkeit und der Sicherheit übermittelter Daten durchführen, wobei mittels einer logischen UND-Verknüpfung eine Datenfreigabe erst dann erfolgt, wenn die Überprüfung mittels beispielsweise aller Kanäle und mittels des Überwachungsmittels ein positives Ergebnis zu Folge hatte.

Vorzugsweise ist das Datenweitergabemittel mittels eines Speichermittels realisiert, auf das gleichzeitig mehrere Lesezugriffe und/oder Schreibzugriffe möglich sind. Hierdurch wird die redundante und parallele Übertragung von identischen Daten vom Datenverarbeitungsmittel (Kanäle) an das Datenweitergabemittel ermöglichst, wobei die Datensperre auch unter Berücksichtigung eines Datenübertragungsvorganges an eine anschließbare übergeordnete Einrichtung aktivierbar wäre.

Die Datensperre ist vorzugsweise mittels eines bidirektional arbeitenden Datenbustreibers realisiert, welcher mittels einer internen Steuerlogik steuerbar ist und zwischen dem Datenweitergabemittel und der anschließbaren übergeordnete Einrichtung angeordnet ist. Derartige Bausteine ermöglichen eine preiswerte Realisierung der erfindungsgemäßen Idee, weil es sich hier um in großen Stückzahlen erhältliche Massenprodukte handelt.

Ganz besonders bevorzugt ist ein mittels eines Rückführungssignals realisiertes Testmittel vorgesehen, mittels dessen die Funktionsfähigkeit der Datensperre überprüfbar ist. Das Testmittel ist vorzugsweise mittels des Datenverarbeitungsmittels und damit mittels der autark voneinander realisierten Kanäle oder mittels zumindest einen der Kanäle ansteuerbar. Somit kann die Kanallogik vor dem Absenden von Daten selbsttätig die korrekte Funktionalität der Datensperre überprüfen. Selbstverständlich könnte das Testmittel auch mittels einer von der Steuerung umfassten zusätzlichen Einrichtung oder mittels des zeitlich steuerbaren Überwachungsmittels, welches auch Logikfunktionen umfassen könnte (Mikrocontroller) überprüfbar sein. Vorzugsweise, insbesondere während der Initialisierung der Steuerung, sollte die Funktion der Datensperre überprüft werden.

Optional könnten auch mehr als zwei Datenkanäle umfasst sein, beispielsweise drei oder vier Kanäle, welche ebenfalls autark voneinander arbeiten und mittels des Datenverarbeitungsmittels oder mehrerer Datenverarbeitungsmittel realisiert sind. Es wäre damit beispielsweise möglich Protokolle, bei denen die übermittelte Datenbreite n x 8 Bit oder n x 16 Bit oder n x 32 Bit mit n = 1,2,3, usw. (n = gerade Zahl) beträgt derart zu übertragen, dass ein Kanal jeweils ein Byte oder Doppelbyte oder 32 Bit überträgt, wobei diese Daten dann mittels des Datenweitergabemittels und gegebenenfalls mittels der anschließbaren übergeordneten Einheit wieder zu einem sicheren Protokoll zusammengeführt werden.

Vorzugsweise ist die erfindungsgemäße Sicherheitssteuerung als Steckmodul für einen Industrie PC realisiert, welches eine Echtzeitsteuerung unabhängig von der PC-Peripherie ermöglicht. Jeder PC lässt sich damit zur Sicherheits-SPS preiswert aufrüsten. Die Anbindung an die PC-Hardware könnte mittels der PCI-Schnittstelle oder anderer bekannter PC-Schnittstellen erfolgen.

Alternativ könnte die erfindungsgemäße Steuerung auch von einer Antriebsregeleinrichtung umfasst sein, wodurch man eine Kombination aus einer Antriebssteuerung und einer Antriebsregelung erhält, die für sicherheitskritische Anwendungen verwendbar und besonders kompakt ist.

Weiter alternativ wäre es möglich eine Standard-SPS mit einer erfindungsgemäßen Sicherheitssteuerung, die beispielsweise als Steckmodul für eine Standard-SPS realisiert ist, zu erweitern. Die nach wie vor vorhandene Standard-SPS-Funktionalität könnte damit für sicherheitsunkritische Vorgänge genutzt werden, während parallel und völlig autark oder unter Berücksichtigung von implementierten Standardabläufen ein sicherer Betrieb von Eingabe- und Ausgabebaugruppen möglich wäre.

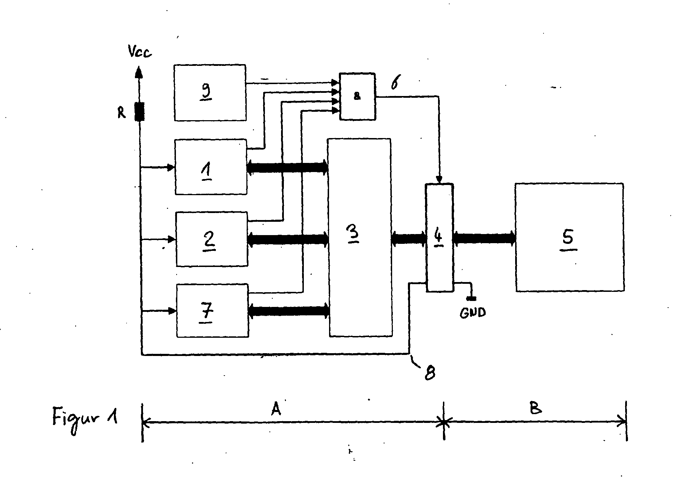

Vorzugsweise wird mittels der Erfindung eine Anordnung zur sicheren Ansteuerung von Eingabe- und Ausgabebaugruppen realisiert, welche zumindest eine der zuvor genannten erfindungsgemäßen Vorrichtungen umfasst, wobei zwischen der Vorrichtung und den sicher anzusteuernden Eingabe- und Ausgabebaugruppen eine übergeordnete Einheit vorgesehen ist, mittels derer Daten zwischen der Vorrichtung und den sicheren Eingabe- und Ausgabebaugruppen mittels Verwendung eines sicheren Datenprotokolls übertragbar sind. Figur 1 zeigt eine erfindungsgemäße Anordnung zur Verriegelung falscher oder unvollständiger sicherheitsgerichteter Telegramme mittels einer Hostsperre. Diese Anordnung umfasst eine sicherheitsrelevante Seite A und eine nicht sicherheitsrelevante Seite B. Die auf der Seite A erfolgenden Operationen erfordern besondere Maßnahmen, so dass keine schwerwiegenden Sicherheitsrisiken beim Betrieb einer mittels der Steuerung betriebenen Anlage entstehen können. Die auf der Seite B erfolgenden Operationen beschränken sich auf die Übertragung von mittels eines sicheren Protokolls gesicherten Daten. Die Seite B wird auch als grauer Kanal bezeichnet. Der graue Kanal ist unter anderem zwischen anzusteuernden sicheren E/A-Schnittstellen und der Sicherheitssteuerung angeordnet.

Die in Figur 1 gezeigte Sicherheitssteuerung umfasst einen optional zuschaltbaren Watchdog 9, einen ersten Kanal 1, einen zweiten Kanal 2, einen dritten und optionalen Kanal 7, bidirektionale Adressbusse und/oder Datenbusse (schwarze Doppelpfeile), ein Datenweitergabemittel bzw. einen Übergabespeicher 3 (z.B. Dualport RAM, Triport RAM je nach Anzahl der Kanäle 1,2,7), eine übergeordnete Einrichtung bzw. ein Hostsystem 5 (Feldbus, etc.), eine Datensperre bzw. Hostsperre 4, ein UND-Gatter & mit Ausgangssignal 6, sowie ein Testmittel, das mittels eines/mehreren Rückführungssignals/en 8 mit Pull up nach Vcc auf der sicherheitsrelevanten Seite A und eine GND - Verbindung auf der nicht sicherheitsrelevanten Seite B realisiert ist.

Im Datenweitergabemittel 3 werden die, von der Sicherheitssteuerung erzeugten, sicherheitsgerichteten Telegramme (abgesichert durch ein Sicherheitsprotokoll) mittels der Kanäle 1,2,7 abgelegt. Da sich während dieser Phase der Datenablage unvollständige oder fehlerhafte oder ungeprüfte Telegramme im Datenweitergabemittel 3 ansammeln könnten, ist der Zugriff die übergeordnete Einrichtung 5 auf das Datenweitergabemittel 3 mittels der Datensperre 4 zunächst verriegelt. Erst wenn die einzelnen Kanäle bzw. Datenkanäle 1,2,7 die sicheren Ausgangsnachrichten im Datenweitergabemittel 3 verifiziert haben, wird der Zugriff die übergeordnete Einrichtung 5 auf das Datenweitergabemittel 3 mittels der Datensperre 4 freigegeben. Es muss jeder einzelne Kanal 1,2,7 explizit seine Zustimmung erteilen, damit die Datensperre 4 freigegeben wird, womit zeitliche "Lücken", während der "unsichere" Telegramme durch die übergeordnete Einrichtung 5 ausgelesen werden könnten, ausgeblendet werden. Die Datensperre 4 selbst besteht aus bidirektionalen Datenbustreibem und unidirektionalen Adressbustreibern und kann mittels des Steuersignals 6 angesteuert werden. Zusätzlich muss in diesem Realisierungsbeispiel ein diskreter Watchdog 9 (Beispielsweise ein Mikrocontroller zur zeitlichen und logischen Programmlaufüberwachung der Kanäle 1,2,7) seine Zustimmung erteilen, damit die Datensperre 4 freigegeben wird. Bei Fehlern der zeitlichen und/oder logischen Programmlaufüberwachung der Kanäle 1,2,7 erkennt dies der diskrete Watchdog 9 und aktiviert dauerhaft die Datensperre 4, so dass keine neuen Telegramme von der übergeordneten Einrichtung 5 aus dem Datenweitergabemittel 3 gelesen werden können. Das Steuersignal 6 wird in diesem Beispiel von einem Gatter 6 geliefert, welches die Verifikationsergebnisse der Kanäle 1,2,7 und des Watchdog 9 logisch miteinander derart verknüpft, dass nur dann ein Steuersignal 6 resultiert, wenn alle Verifikationstests positiv verlaufen sind.

Die Testbarkeit der Funktionalität der Datensperre 4 ist durch ein/mehrere Rückführungssignal(e) 8 gewährleistet. Diese Rückführungssignal(e) 8 bestehen beispielsweise aus einem oder mehreren Bits des Adressbustreibers der Datensperre 4, welche zwischen GND und einem Pull up R geschaltet wurden und deren Potential mittels der Kanäle 1,2,7 beziehungsweise der einer Datenverarbeitungseinrichtung zur Realisierung der Kanäle 1,2,7 abfragbar sind.

Die Verriegelung/Sperrung der Ausgangsdatenübernahme (Sicherheitsprotokoll) erfolgt aufgrund der Erfindung direkt an der Übergabestelle zur übergeordneten Einrichtung 5 (z.B. Feldbus). Erst wenn ein gültiges, getestetes Protokoll zur Verfügung steht, wird die Datenübertragung freigegeben. Der Watchdog 9 stellt einen zweiten Abschaltweg dar, welcher die Sicherheit weiter erhöht. Ein Einsatz dieses erfindungsgemäßen Konzeptes in Form einer Baugruppe wäre bei unterschiedlichsten Varianten von Steuerungen einsetzbar (Racklösung, PC-Lösung, etc.). Die Erfindung konvertiert eine Standard-Steuerung zu einer mehrkanaligen Sicherheitssteuerung.

## Patentansprüche

1. Steuerung, mit
zumindest einem Datenverarbeitungsmittel zur Realisierung eines ersten Datenkanals (1) und eines zweiten Datenkanals (2),
einem Datenweitergabemittel (3), welches mit beiden Datenkanälen (1,2) derart verbunden ist, dass mittels des Datenweitergabemittels (3) Daten aus zumindest einem Datenkanal (1,2) an eine an die Steuerung angeschlossene übergeordnete Einrichtung (5) übermittelbar sind, und
einer aktiven Datensperre (4), mittels derer die mittels des Datenweitergabemittels (3) realisierte Datenübermittlung an die übergeordnete Einrichtung (5) beeinflussbar ist
**dadurch gekennzeichnet, dass**
das Datenweitergabemittel (3) mittels eines Speichermittels realisiert ist, auf das gleichzeitig mehrere Zugriffe möglich sind,
wobei die mittels des Datenweitergabemittels (3) realisierte Datenübermittlung an die übergeordnete Einrichtung (5) derart mittels der Datensperre (4) beeinflussbar ist, dass die übergeordnete Einrichtung (5) erst dann ein Zugriffsrecht auf in dem Datenweitergabemittel (3) gespeicherte Daten erhält, wenn jeder einzelne der beiden Datenkanäle (1,2) explizit seine Zustimmung zur Freigabe der Datensperre (4) erteilt hat.

2. Steuerung nach Anspruch 1, wobei zumindest ein Datenkanal (1,2) eine physikalische Datenschnittstelle für den Datenaustausch mit dem Datenweitergabemittel (3) nutzt, welche dieselbe physikalische Datenschnittstelle ist, die das Datenweitergabemittel (3) zum Datenaustausch mit der Datensperre (4) nutzt.

3. Steuerung nach einem der vorhergehenden Ansprüche, wobei die Beeinflussung der Datenweitergabe mittels eines Datenfreigabesignals (6) realisiert ist, welches auch mittels des Datenverarbeitungsmittels generierbar ist.

4. Steuerung nach einem der vorhergehenden Ansprüche, wobei die Beeinflussung der Datenweitergabe mittels eines Datenfreigabesignals (6) realisiert ist, welches auch mittels eines zeitlich steuerbaren Überwachungsmittels (9) generierbar ist.

5. Steuerung nach einem der vorhergehenden Ansprüche, wobei die Datensperre (4) mittels eines bidirektional arbeitenden Datenbustreibers realisiert ist, welcher mittels einer internen Steuerlogik steuerbar ist und zwischen dem Datenweitergabemittel (3) und der anschließbaren übergeordneten Einrichtung (5) mittels zumindest eines Busses angeordnet ist.

6. Steuerung nach einem der vorhergehenden Ansprüche, wobei ein Testmittel, welches durch ein Rückführungssignal (8) realisiert ist, vorgesehen ist, mittels dessen die Funktionsfähigkeit der Datensperre (4) überprüfbar ist.

7. Steuerung nach einem der vorhergehenden Ansprüche, wobei mehr als zwei Datenkanäle (1,2,7) umfasst sind.

8. Steuerung nach einem der vorhergehenden Ansprüche, wobei diese als Steckmodul für einen Industrie PC realisiert ist.

9. Steuerung nach einem der vorhergehenden Ansprüche, wobei diese von einer Antriebsregeleinrichtung umfasst ist.

10. Steuerung nach einem der vorhergehenden Ansprüche, wobei diese von einer SPS umfasst ist.

11. Anordnung zur sicheren Ansteuerung zumindest einer sicheren Eingabebaugruppe und/oder Ausgabebaugruppe, umfassend eine Steuerung nach einem der Ansprüche 1 bis 11, wobei zwischen der Steuerung und der sicheren Eingabebaugruppe und/oder Ausgabebaugruppe die übergeordnete Einrichtung (5) vorgesehen ist, mittels derer Daten zwischen der Steuerung und der sicheren Eingabebaugruppe und/oder Ausgabebaugruppe mittels eines sicheren Datenprotokolls übertragbar sind.

12. Verfahren zum Betrieb einer Steuerung mit zumindest einem Datenverarbeitungsmittel zur Realisierung eines ersten Datenkanals (1) und eines zweiten Datenkanals (2) sowie mit einem Datenweitergabemittel (3), welches mit beiden Datenkanälen (1,2) derart verbunden ist, dass mittels des Datenweitergabemittels (3) Daten aus zumindest einem Datenkanal (1,2) an eine an die Steuerung angeschlossene übergeordnete Einrichtung (5) übertragbar sind, wobei eine aktive Datensperre (4) vorgesehen ist, mittels derer die mittels des Datenweitergabemittels (3) realisierbare Datenweitergabe an die übergeordnete Einrichtung (5) beeinflussbar ist, mit folgenden Verfahrensschritten:
a) Datenverarbeitung mittels des Datenverarbeitungsmittels;
b) Datenübertragung mittels der Datenkanäle (1,2) an das Datenweitergabemittel (3), welches mittels eines Speichermittels realisiert ist, auf das gleichzeitig mehrere Zugriffe möglich sind;
c) Beeinflussung des Datenflusses für eine an die Steuerung anschließbare Einrichtung (5) derart, dass die übergeordnete Einrichtung (5) erst dann ein Zugriffsrecht auf in dem Datenweitergabemittel (3) gespeicherte Daten erhält, wenn jeder einzelne der beiden Datenkanäle (1,2) explizit seine Zustimmung zur Freigabe der Datensperre (4) erteilt hat.

13. Verfahren nach Anspruch 12, wobei das Datenverarbeitungsmittel ein Signal zur Erzeugung eines Datenfreigabesignals (6) unter Berücksichtigung eines Ergebnisses einer Überprüfung von mittels der Datenkanäle (1,2) an das Datenweitergabemittel (3) übergebenen Daten erzeugt.

14. Verfahren nach einem der Ansprüche12 oder 13, wobei mittels der Datensperre (4) Daten bidirektional übertragen werden, indem die Datensperre (4) mittels eines Datenfreigabesignals (6) angesteuert wird.

15. Verfahren nach einem der Ansprüche 12 bis 14, wobei insbesondere während der Initialisierung der Steuerung die Funktion der Datensperre (4) überprüft wird.

## Claims

1. Controller, having
at least one data processing means for implementing a first data channel (1) and a second data channel (2),
a data forwarding means (3) which is connected to both data channels (1, 2) such that the data forwarding means (3) can be used to transmit data from at least one data channel (1, 2) to a superordinate device (5) connected to the controller, and
an active lock (4) which can be used to influence the data transmission to the superordinate device (5) that is implemented by means of the data forwarding means (3),
**characterized in that**
the data forwarding means (3) is implemented by means of a memory means on which multiple access operations are possible simultaneously,
wherein the data transmission to the superordinate device (5) that is implemented by means of the data forwarding means (3) can be influenced by means of the lock (4) such that the superordinate device (5) is provided with an access right to data stored in the data forwarding means (3) only when each individual one of the two data channels (1, 2) has explicitly given its consent to the lock (4) being released.

2. Controller according to Claim 1, wherein at least one data channel (1, 2) uses a physical data interface for the data interchange with the data forwarding means (3), which is the same physical data interface as is used by the data forwarding means (3) for the data interchange with the lock (4).

3. Controller according to one of the preceding claims, wherein the data forwarding is influenced by means of a data release signal (6), which can also be generated by means of the data processing means.

4. Controller according to one of the preceding claims, wherein the data forwarding is influenced by means of a data release signal (6), which can also be generated by means of a temporally controllable monitoring means (9).

5. Controller according to one of the preceding claims, wherein the lock (4) is implemented by means of a bidirectionally operating data bus driver which can be controlled by means of an internal control logic unit and is arranged between the data forwarding means (3) and the connectable superordinate device (5) by means of at least one bus.

6. Controller according to one of the preceding claims, wherein a test means, which is implemented by a feedback signal (8), is provided which can be used to check the functionality of the lock (4).

7. Controller according to one of the preceding claims, wherein more than two data channels (1, 2, 7) are comprised.

8. Controller according to one of the preceding claims, wherein said controller is in the form of a plug-in module for an industrial PC.

9. Controller according to one of the preceding claims, wherein said controller is comprised by a drive control device.

10. Controller according to one of the preceding claims, wherein said controller is comprised by a PLC.

11. Arrangement for the safe actuation of at least one safe input assembly and/or output assembly, comprising a controller according to one of Claims 1 to 11, wherein the controller and the safe input assembly and/or output assembly have the superordinate device (5) provided between them which can be used to transfer data between the controller and the safe input assembly and/or output assembly using a safe data protocol.

12. Method for the operation of a controller having at least one data processing means for implementing a first data channel (1) and a second data channel (2) and also having a data forwarding means (3) which is connected to both data channels (1, 2) such that the data forwarding means (3) can be used to transfer data from at least one data channel (1, 2) to a superordinate device (5) connected to the controller, wherein an active lock (4) is provided which can be used to influence the data forwarding to the superordinate device (5) that can be implemented by means of the data forwarding means (3), having the following method steps:
a) data processing by means of the data processing means;
b) data transfer by means of the data channels (1, 2) to the data forwarding means (3), which is implemented by means of a memory means on which multiple access operations are possible simultaneously;
c) influencing of the data flow for a device (5) which can be connected to the controller, such that the superordinate device (5) is provided with an access right to data stored in the data forwarding means (3) only when each individual one of the two data channels (1, 2) has explicitly given its consent to the lock (4) being released.

13. Controller according to Claim 12, wherein the data processing means produces a signal for producing a data release signal (6) taking account of a result of a check on data transferred by means of the data channels (1, 2) to the data forwarding means (3).

14. Method according to one of Claims 12 and 13, wherein the lock (4) is used to transfer data bidirectionally by actuating the lock (4) using a data release signal (6).

15. Method according to one of Claims 12 to 14, wherein the operation of the lock (4) is checked particularly during the initialization of the controller.

## Revendications

1. Commande, dotée :
d'au moins un moyen de traitement de données pour réaliser un premier canal de données (1) et un deuxième canal de données (2) ;
d'un moyen de relayage de données (3) relié aux deux canaux de données (1, 2) de telle sorte que les données provenant d'au moins un canal de données (1, 2) sont transmises à un dispositif (5) subordonné raccordé à la commande à l'aide du moyen de relayage de données (3) ; et
d'un élément de blocage de données (4) actif permettant d'influencer la transmission de données au dispositif (5) subordonné réalisée à l'aide du moyen de relayage de données (3) ;
**caractérisée en ce que** :
le moyen de relayage de données (3) est réalisé à l'aide d'un moyen de mémorisation pouvant faire l'objet de plusieurs accès simultanés ;
la transmission de données au dispositif (5) subordonné réalisée à l'aide du moyen de relayage de données (3) peut être influencée à l'aide de l'élément de blocage de données (4) de telle sorte que le dispositif (5) subordonné obtient alors un droit d'accès aux données mémorisées dans le moyen de relayage de données (3), lorsque chacun des deux canaux de données (1, 2) individuels a explicitement donné son accord de libération à l'élément de blocage de données (4).

2. Commande selon la revendication 1, au moins un canal de données (1, 2) utilisant une interface de données physique pour l'échange de données avec le moyen de relayage de données (3), ladite interface étant la même interface de données physique que celle utilisée par le moyen de relayage de données (3) pour l'échange de données avec l'élément de blocage de données (4).

3. Commande selon l'une quelconque des revendications précédentes, l'influençage du relayage de données étant réalisé à l'aide d'un signal de libération de données (6) pouvant également être généré à l'aide du moyen de traitement de données.

4. Commande selon l'une quelconque des revendications précédentes, l'influençage du relayage de données étant réalisé à l'aide d'un signal de libération de données (6) pouvant également être généré à l'aide d'un moyen de surveillance (9) commandable dans le temps.

5. Commande selon l'une quelconque des revendications précédentes, l'élément de blocage de données (4) pouvant être réalisé à l'aide d'un pilote de bus de données fonctionnant de façon bidirectionnelle pouvant être commandé à l'aide d'une logique de commande interne et disposé entre le moyen de relayage de données (3) et le dispositif (5) subordonné pouvant être raccordé à l'aide d'au moins un bus.

6. Commande selon l'une quelconque des revendications précédentes, dans laquelle est prévu un moyen de test pouvant être réalisé à travers un signal d'asservissement (8) et à l'aide duquel la fonctionnalité de l'élément de blocage de données (4) peut être contrôlée.

7. Commande selon l'une quelconque des revendications précédentes, **caractérisée en ce qu'**elle comprend plus de deux canaux de données (1, 2, 7).

8. Commande selon l'une quelconque des revendications précédentes, **caractérisée en ce qu'**elle peut être réalisée sous la forme d'un module enfichable pour un PC industriel.

9. Commande selon l'une quelconque des revendications précédentes, **caractérisée en ce qu'**elle est comprise dans un dispositif de réglage d'entraînement.

10. Commande selon l'une quelconque des revendications précédentes, **caractérisée en ce qu'**elle est comprise dans un SPS.

11. Dispositif de commande sécurisée d'au moins un groupe modulaire d'entrée et/ou un groupe modulaire de sortie sécurisés, comprenant une commande selon l'une quelconque des revendications 1 à 11, le dispositif (5) subordonné étant prévu entre la commande et le groupe modulaire d'entrée et/ou le groupe modulaire de sortie sécurisés, les données dudit dispositif subordonné pouvant être transmises entre la commande et le groupe modulaire d'entrée et/ou le groupe modulaire de sortie sécurisés à l'aide d'un protocole de données sécurisé.

12. Procédé d'exploitation d'une commande dotée d'au moins un moyen de traitement de données pour réaliser un premier canal de données (1) et un deuxième canal de données (2) ainsi que d'un moyen de relayage de données (3) qui est relié aux deux canaux de données (1, 2) de telle sorte que les données provenant d'au moins un canal de données (1, 2) peuvent être transmises à un dispositif (5) subordonné raccordé à la commande à l'aide du moyen de relayage de données (3), un élément de blocage de données (4) actif étant prévu pour influencer le relayage de données au dispositif (5) subordonné réalisable à l'aide du moyen de relayage de données (3), avec les étapes de procédé suivantes :
a) traitement des données à l'aide du moyen de traitement de données ;
b) relayage des données à l'aide des canaux de données (1, 2) au niveau du moyen de relayage de données (3) pouvant être réalisé à l'aide d'un moyen de mémorisation pouvant faire l'objet de plusieurs accès simultanés ;
c) influençage du flux de données pour un dispositif (5) pouvant être raccordé à la commande de telle sorte que le dispositif (5) subordonné ne reçoit un droit d'accès aux données mémorisées dans le moyen de relayage de données (3) que lorsque chacun des deux canaux de données (1, 2) individuels a donné explicitement son accord de libération à l'élément de blocage de données (4).

13. Procédé selon la revendication 12, le moyen de traitement de données produisant un signal servant à produire un signal de libération de données (6) en fonction du résultat d'un contrôle des données transmises au moyen de relayage de données (3) à l'aide des canaux de données (1, 2).

14. Procédé selon l'une quelconque des revendications 12 ou 13, les données étant transmises de façon bidirectionnelle à l'aide de l'élément de blocage de données (4), l'élément de blocage de données (4) étant commandé à l'aide d'un signal de libération de données (6).

15. Procédé selon l'une quelconque des revendications 12 à 14, la fonction de l'élément de blocage de données (4) étant contrôlée notamment pendant l'initialisation de la commande.
